# EUROPEAN PATENT APPLICATION

(11) **EP 4 228 352 A1**
(43) Date of publication of application: **16.08.2023**
(21) Application number: 20956749.4
(22) Date of filing: 08.10.2020
(51) Int. Cl.: H04W 72/04, H04W 28/04

(54) **TERMINAL, WIRELESS COMMUNICATION METHOD, AND BASE STATION**

(71) Applicant: NTT DOCOMO, INC., Tokyo 100-6150 (JP)
(72) Inventor: KUMAGAI, Shinya, Tokyo 100-6150 (JP); YOSHIOKA, Shohei, Tokyo 100-6150 (JP); NAGATA, Satoshi, Tokyo 100-6150 (JP)
(74) Representative: Hoffmann Eitle
(86) International application number: PCT/JP2020/038189
(87) International publication number: WO 2022/074802

(57) **Abstract**

A terminal according to an aspect of the present disclosure includes a receiving section that receives a first configuration of a primary physical uplink control channel (PUCCH) group, a second configuration of a secondary PUCCH group, and a first list indicating one or more hybrid automatic repeat request-acknowledgement (HARQ-ACK) codebook types for a physical downlink shared channel (PDSCH), and a control section that determines one or more first HARQ-ACK codebook types for the primary PUCCH group based on the first list, and determines one or more second HARQ-ACK codebook types for the secondary PUCCH group based on at least one of the first list, a higher layer parameter, and a specification. According to an aspect of the present disclosure, the HARQ-ACK codebook can be appropriately determined.

## Description

### Technical Field

The present disclosure relates to a terminal, a radio communication method, and a base station in next-generation mobile communication systems.

### Background Art

In a universal mobile telecommunications system (UMTS) network, specifications of long term evolution (LTE) have been drafted for the purpose of further increasing data rates, providing low latency, and the like (Non Patent Literature 1). Furthermore, the specifications of LTE-Advanced (3GPP Rel. 10 to 14) have been drafted for the purpose of further increasing capacity and advancement of LTE (third generation partnership project (3GPP) release (Rel.) 8 and 9).

Successor systems to LTE (for example, also referred to as 5th generation mobile communication system (5G), 5G+ (plus), 6th generation mobile communication system (6G), New Radio (NR), or 3GPP Rel. 15 and subsequent releases) are also being studied.

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)", April 2010

### Summary of Invention

### Technical Problem

In a future radio communication system (for example, NR), a plurality of physical uplink control channel (PUCCH) groups may be configured.

However, there is a case where it is not clear how a Hybrid Automatic Repeat reQuest-ACKnowledgement (HARQ-ACK) codebook of each PUCCH group is determined. If the HARQ-ACK codebook is not clear, a decrease in throughput or the like may be caused.

Therefore, an object of the present disclosure is to provide a terminal, a radio communication method, and a base station that appropriately determine a HARQ-ACK codebook.

### Solution to Problem

A terminal according to an aspect of the present disclosure includes a receiving section that receives a first configuration of a primary physical uplink control channel (PUCCH) group, a second configuration of a secondary PUCCH group, and a first list indicating one or more hybrid automatic repeat request-acknowledgement (HARQ-ACK) codebook types for a physical downlink shared channel (PDSCH), and a control section that determines one or more first HARQ-ACK codebook types for the primary PUCCH group based on the first list, and determines one or more second HARQ-ACK codebook types for the secondary PUCCH group based on at least one of the first list, a higher layer parameter, and a specification.

### Advantageous Effects of Invention

According to an aspect of the present disclosure, the HARQ-ACK codebook can be appropriately determined.

### Brief Description of Drawings

[FIG. 1] Fig. 1 is a diagram illustrating an example of a HARQ-ACK codebook corresponding to a priority index.
[FIG. 2] Fig. 2 is a diagram illustrating an example of Aspect 1-1.
[FIG. 3] Fig. 3 is a diagram illustrating an example of Aspect 1-2.
[FIG. 4] Fig. 4 is a diagram illustrating an example of Aspect 1-3-2.
[FIG. 5] Fig. 5 is a diagram illustrating an example of a schematic configuration of a radio communication system according to an embodiment.
[FIG. 6] Fig. 6 is a diagram illustrating an example of a configuration of a base station according to an embodiment.
[FIG. 7] Fig. 7 is a diagram illustrating an example of a configuration of a user terminal according to an embodiment.
[FIG. 8] Fig. 8 is a diagram illustrating an example of a hardware configuration of a base station and a user terminal according to an embodiment.

### Description of Embodiments

### <HARQ-ACK Codebook>

In the NR, a mechanism has been studied in which a user terminal (user equipment (UE)) performs feedback (also referred to as report, transmission, or the like) of delivery confirmation information (also referred to as hybrid automatic repeat request-acknowledge (HARQ-ACK), ACKnowledge/Non-ACK (ACK/NACK), HARQ-ACK information, A/N, or the like) for a downlink shared channel (also referred to as physical downlink shared channel (PDSCH) or the like).

For example, in the NR, a value of a field in Downlink Control Information (DCI) (for example, DCI format 1_0, 1_1, or 1_2) used for PDSCH scheduling indicates a feedback timing of HARQ-ACK for the PDSCH. In a case where the UE transmits, in a slot #n+k, the HARQ-ACK for the PDSCH received in a slot #n, the value of the field may be mapped to a value of k. The field is referred to, for example, a PDSCH-HARQ feedback timing indicator (PDSCH-to-HARQ_feedback timing indicator) field or the like.

Furthermore, in the NR, a resource (for example, a resource (PUCCH resource) for an uplink control channel (for example, Physical Uplink Control Channel (PUCCH))) used for feedback of HARQ-ACK for the PDSCH is determined on the basis of a value of a field in DCI (for example, DCI format 1_0, 1_1, or 1_2) used for scheduling the PDSCH. The field may be referred to as, for example, a PUCCH resource indicator (PRI) field, an ACK/NACK resource indicator (ARI) field, or the like. The value of the field may be referred to as a PRI, an ARI, or the like.

The PUCCH resource mapped to each value of the field may be configured in the UE in advance by a higher layer parameter (for example, ResourceList in PUCCH-ResourceSet). Further, the PUCCH resource may be configured in the UE for each set (PUCCH resource set) including one or more PUCCH resources.

Further, in the NR, one or more HARQ-ACKs may be mapped to a HARQ-ACK codebook, and the HARQ-ACK codebook may be transmitted on a PUCCH resource indicated by a specific DCI (for example, most recent (last) DCI).

Here, the HARQ-ACK codebook is configured to include bits for HARQ-ACK in a certain range. The bit is also referred to as a HARQ-ACK bit, HARQ-ACK information, a HARQ-ACK information bit, or the like. The HARQ-ACK codebook is also referred to as a PDSCH-HARQ-ACK codebook (pdsch-HARQ-ACK-Codebook), a codebook, a HARQ codebook, a HARQ-ACK size, or the like.

Here, the region described above may be specified using at least one unit of a monitoring occasion (PDCCH monitoring occasion)) of a time domain (for example, a slot or a downlink control channel (for example, Physical Downlink Control Channel (PDCCH)), a frequency domain (for example, a component carrier (CC)), a spatial domain (for example, a layer), a transport block (TB), or a group of code blocks (code block group (CBG)) configuring the TB.

The range is also referred to as a HARQ-ACK window, a window, a HARQ-ACK bundling window, a HARQ-ACK feedback window, a bundling window, a feedback window, or the like.

The number (size) of bits or the like included in the HARQ-ACK codebook may be determined in a semi-static or dynamic manner. The HARQ-ACK codebook of which the size is determined in a semi-static manner is also referred to as a semi-static HARQ-ACK codebook, a type-1 HARQ-ACK codebook, a semi-static codebook, or the like. The HARQ-ACK codebook of which the size is determined in a dynamic manner is also referred to as a dynamic HARQ-ACK codebook, a type-2 HARQ-ACK codebook, a dynamic codebook, or the like.

Note that, in the present disclosure, "determining a semi-static HARQ-ACK codebook" may be determining at least one of the number of bits (size), order, and bit value in the semi-static HARQ-ACK codebook. In addition, "determining a dynamic HARQ-ACK codebook" may be determining at least one of the number of bits (size), order, and bit value in the dynamic HARQ-ACK codebook.

In the case of the semi-static HARQ-ACK codebook, the UE may determine a semi-static HARQ-ACK codebook regardless of presence or absence of PDSCH scheduling in the HARQ-ACK window. For example, the semi-static HARQ-ACK codebook may be determined based on at least one of the following parameters:
a: Value K₁ indicating timing of HARQ-ACK (HARQ-ACK timing value, PDSCH-HARQ feedback timing indication)
b: a table used to determine a time domain resource allocated to the PDSCH (PDSCH time domain resource allocation (RA) table (PDSCH time domain resource allocation table))
c: in a case where different subcarrier spacings are configured for the downlink and the uplink, the (µ_{DL} - µ_{UL})th power of the ratio 2 of the configuration µ_{DL} of the subcarrier spacing of the downlink (or the downlink BWP) and the configuration µ_{UL} of the subcarrier spacing of the uplink (or the uplink BWP)
d: Cell-specific TDD UL/DL configuration (for example, TDD-UL-DL-ConfigurationCommon) and slot specific configuration overwriting cell-specific TDD UL/DL configuration (for example, TDD-UL-DL-ConfigDedicated)

On the other hand, in the case of the dynamic HARQ-ACK codebook, the UE may determine the dynamic HARQ-ACK codebook based on presence or absence of PDSCH in the HARQ-ACK window. For example, the dynamic HARQ-ACK codebook may be determined on the basis of a value of a field (for example, a downlink assignment indicator (index) (DAI) field) in the DCI.

The value of the DAI field in the DCI may indicate the counter DAI, or may indicate the counter DAI and the total DAI. The counter DAI may indicate a count value of the PDSCH allocated before the target time. The total DAI may indicate the total number of PDSCH transmitted before the target time in the HARQ-ACK window.

For example, the value of the bit of the DAI field in the DCI (for example, a certain number of least significant bits (LSB)) may indicate the counter DAI, and the value of the remaining bits of the DAI field (for example, a number of most significant bits (MSB)) may indicate the total DAI.

The UE may receive information indicating whether to use the semi-static HARQ-ACK codebook or the dynamic HARQ-ACK codebook as described above (type information, for example, "pdsch-HARQ-ACK-Codebook" of a Radio Resource Control (RRC) parameter). Note that the RRC parameter may be referred to as an information element (IE) of RRC.

Specifically, the UE may receive the type information for each group including one or more cells. The PUCCH may be transmitted by one cell in the group. The group may be referred to as a cell group, a master cell group (MCG), a secondary cell group (SCG), a PUCCH group, a PUCCH cell group, or the like.

In addition, a cell may also be replaced with a serving cell, a carrier, a component carrier (CC), or the like. A cell to which the PUCCH is transmitted may be referred to as a special cell (SpCell) primary cell (Primary Cell (PCell)), a primary secondary cell (Primary Secondary Cell (PSCell)), a PUCCH cell, or the like.

The UE may include, in a HARQ-ACK codebook of a type configured for the cell group (for example, a semi-static HARQ-ACK codebook (Type 1) or a dynamic HARQ-ACK codebook (Type 2)), a HARQ-ACK for a PDSCH received within a particular time period on one or more CCs in the cell group.

### <Priority>

For NR for Rel. 16 and subsequent releases, setting priorities at a plurality of levels (for example, two levels) for a specific signal or channel is being studied. For example, it is assumed that communication is controlled (for example, transmission control at the time of collision, and the like) by configuring different priorities for every signal or channel each corresponding to different traffic types (also referred to as services, service types, communication types, use cases, and the like). By this means, it is possible to control communication by configuring, for the same signal or channel, different priorities according to the service type or the like.

The priority may be configured for a signal (for example, uplink control information (UCI) such as HARQ-ACK and a reference signal), a channel (PDSCH, PUSCH, or the like), a HARQ-ACK codebook, or the like. The priorities may be defined by a first priority (for example, High, 1) and a second priority (for example, Low, 0) that is lower than the first priority. Alternatively, three or more types of priorities may be configured. Notification of the information about the priority may be sent from the base station to a UE by using at least one of higher layer signaling and DCI.

For example, a priority may be configured to UCI (for example, at least one of a scheduling request, CSI, and HARQ-ACK). Priorities may be configured for HARQ-ACK codebooks corresponding to these HARQ-ACKs. Alternatively, a priority may be configured to a PUSCH used for transmission of a given MAC CE. Note that when the priority is configured to the PUSCH, the priority of the information or signal (for example, MAC CE, CSI, and the like) transmitted by the PUSCH may be replaced with the priority of the PUSCH.

In addition, priorities may be configured for a dynamic grant-based PUSCH, a configured grant-based PUSCH, or the like.

The UE may control UL transmission based on the priorities in a case where different UL signals or UL channels collide with each other. For example, control may be performed in such a way that UL transmission with high priority is performed and that UL transmission with low priority is not performed (for example, dropped). Alternatively, transmission timing of UL transmission with low priority may be changed (for example, to defer or to shift).

The collision between different UL signals/UL channels may be a case where time resources (or time resources and frequency resources) of the different UL signals or UL channels overlap with each other or a case where transmission timing of the different UL signals or UL channels overlap with each other.

The priority indicator field in the DCI for scheduling data (PDSCH/PUSCH) may indicate the priority (priority index) of that data.

The priority may be associated with a traffic type corresponding to communication requirements (requirements and required conditions such as latency and error rate), and a data type (voice, data, etc.), or the like. Traffic types (also referred to as types, services, service types, communication types, or use cases) such as a further enhanced mobile broadband (eMBB), machine type communications that embody multiple simultaneous connection (for example, massive machine type communications (mMTC), Internet of Things (IoT), and high-reliability and low-latency communication (for example, ultra-reliable and low-latency communications (URLLC)) are expected.

The priority of URLLC may be higher than the priority of eMBB. The priority may be configured to "high" (high priority, 1) for URLLC, and the priority may be configured to "low" (low priority, 0) for eMBB.

Enhancement of the reliability of traffic for unicast data is mainly studied as enhanced Ultra Reliable and Low Latency Communications (eURLLC). Hereinafter, in a case where no distinction is made between URLLC and eURLLC, they are simply referred to as URLLC.

In the eURLLC of NR Rel. 16, the UE can report low-priority or high-priority HARQ-ACK information to the base station. The UE may multiplex multiple HARQ-ACKs as HARQ-ACK codebooks (CBs). Type 1 (semi-static) and type 2 (dynamic) are supported as codebook types.

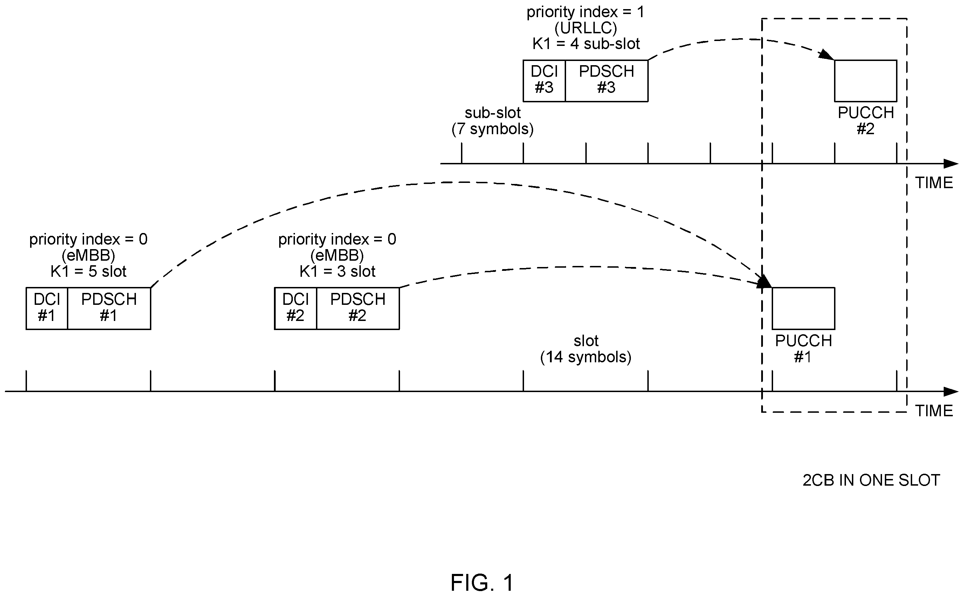

In the example of Fig. 1, the PDSCH #1 and #2 are respectively scheduled by the DCI #1 and #2 indicating the priority index (priority indicator) 0, and the PDSCH #3 is scheduled by the DCI #3 indicating the priority index 1. The priority index 0 may correspond to eMBB, and the priority index 0 may correspond to URLLC. The UE may transmit PUCCH #1 including HARQ-ACK codebooks for PDSCH #1 and #2 for eMBB and PUCCH #2 including HARQ-ACK codebook for PDSCH #3 for URLLC in one slot.

For codebook types for HARQ feedback for DL reception, in NR Rel. 16, up to two codebook types for URLLC may be configured for UE by PDSCH-HARQ-ACK codebook type list (PDSCH-HARQ-ACK-CodebookList-r16). Of the two codebooks that are configured, a first codebook is for a low priority (priority index 0), and a second codebook is for a high priority (priority index 1).

If the UE is provided with a PDSCH-HARQ-ACK codebook type list, the UE is instructed by the PDSCH-HARQ-ACK codebook type list to generate one or two HARQ-ACK codebooks. If the UE is instructed to generate one HARQ-ACK codebook, the HARQ-ACK codebook is associated with the PUCCH of the priority index 0. If the UE is provided with a PDSCH-HARQ-ACK codebook type list, the UE multiplexes only HARQ-ACK information associated with the same priority index into one and the same HARQ-ACK codebook. If the UE is instructed to generate two HARQ-ACK codebooks, the HARQ-ACK codebook follows the following procedures 1 and 2.

### [Procedure 1]

The first HARQ-ACK codebook is associated with the PUCCH with priority index 0, and the second HARQ-ACK codebook is associated with the PUCCH with priority index 1.

### [Procedure 2]

For use of the first HARQ-ACK codebook and the second HARQ-ACK codebook, the UE is provided with the first parameter and the second parameter for each of the PUCCH configuration parameter, the UCI parameter on the PUSCH, and the PDSCH code block group transmission parameter (PUCCH-Config, UCI-OnPUSCH, PDSCH-codeBlockGroupTransmission) by PUCCH configuration parameter list, UCI parameter on PUSCH list, and PDSCH code block group transmission parameter list (PUCCHConfigurationList, UCI-OnPUSCH-List, PDSCH-CodeBlockGroupTransmission-List).

If the PDSCH-HARQ-ACK codebook type list is configured, the UE ignores the PDSCH-HARQ-ACK codebook type (pdsch-HARQ-ACK-Codebook) that configures only one codebook.

Two PUCCH groups may be configured for a certain cell group. The primary PUCCH group may be PCell (PSCell) and SCell associated with PUCCH on PCell (PSCell) in a certain cell group. In the cell group, the secondary PUCCH group may be an SCell associated with the PUCCH on the PUCCH-SCell.

In the NR Rel. 16, if two PUCCH groups are configured for a cell group, a maximum of two codebook types may be configured by a PDSCH-HARQ-ACK codebook type and a PDSCH-HARQ-ACK codebook type for a secondary PUCCH group (pdsch-HARQ-ACK-Codebook-secondaryPUCCHgroup). That is, the codebook type of the primary PUCCH group is configured by the PDSCH-HARQ-ACK codebook type, and the codebook type of the secondary PUCCH group is configured by the PDSCH-HARQ-ACK codebook type for the secondary PUCCH group.

The primary PUCCH group may be PCell (PSCell) and SCell associated with PUCCH on PCell (PSCell) in a certain cell group. In the cell group, the secondary PUCCH group may be an SCell associated with the PUCCH on the PUCCH-SCell.

However, if two PUCCH groups are configured for a certain cell group, and two priority indexes are used in one of the PUCCH groups, it is not clear which codebook type the UE uses to report the HARQ-ACK. If the codebook type is not clear, a difference in recognition may occur between the UE and the base station, which may lead to throughput degradation and the like.

Therefore, the present inventors conceived a method for determining a HARQ-ACK codebook type.

Hereinafter, embodiments according to the present disclosure will be described in detail with reference to the drawings. The radio communication method according to each of the embodiments may be applied independently, or may be applied in combination with others.

In the present disclosure, "A/B/C" and "at least one of A, B and C" are interchangeable. In the present disclosure, the cell, the CC, the carrier, the BWP, the DL BWP, the UL BWP, the active DL BWP, the active UL BWP, and the band may be replaced with one another. In the present disclosure, index, ID, indicator, and resource ID are interchangeable. In the present disclosure, "support", "control", "controllable", "operate", and "operable" are interchangeable.

In the present disclosure, "configure", "activate", "update", "indicate", "enable", "specify", and "select" are interchangeable.

In the present disclosure, the higher layer signaling may be any of, for example, radio resource control (RRC) signaling, medium access control (MAC) signaling, broadcast information, or the like, or a combination thereof. In the present disclosure, the RRC, the RRC signaling, the RRC parameter, the higher layer, the higher layer parameter, the RRC information element (IE), and the RRC message may be replaced with one another.

For example, a MAC Control Element (MAC CE), a MAC Protocol Data Unit (PDU), or the like may be used for the MAC signaling. The broadcast information may be, for example, a Master Information Block (MIB), a System Information Block (SIB), Remaining Minimum System Information (RMSI), Other System Information (OSI), or the like.

In the present disclosure, HARQ-ACK information, ACK/NACK may be replaced with each other.

In the present disclosure, the HARQ-ACK codebook type 1 and the semi-static codebook may be replaced with each other. In the present disclosure, the HARQ-ACK codebook type 2 and the dynamic codebook may be replaced with each other.

In the present disclosure, the priority index, the priority indicator, the service, and the traffic type may be replaced with one another. In the present disclosure, the priority index of 0 and the eMBB may be replaced with each other. In the present disclosure, the priority index of 1 and the URLLC may be replaced with each other.

In the present disclosure, the PDSCH-HARQ-ACK codebook type, the PDSCH-HARQ-ACK codebook parameter, the PDSCH-HARQ-ACK codebook, and the PDSCH-HARQ-ACK-Codebook may be replaced with one another. In the present disclosure, the PDSCH-HARQ-ACK codebook type list, the PDSCH-HARQ-ACK codebook parameter list, the PDSCH-HARQ-ACK codebook list, and the PDSCH-HARQ-ACK-CodebookList may be replaced with one another.

### (Radio Communication Method)

### <First Embodiment>

When a primary PUCCH group and a secondary PUCCH group are configured, and a PDSCH-HARQ-ACK codebook type list (PDSCH-HARQ-ACK-CodebookList-r16, first list) is configured, the UE may determine a HARQ-ACK codebook type for the primary PUCCH group and the secondary PUCCH group.

Determination of the HARQ-ACK codebook type may be according to any of the following Aspects 1-1 to 1-3:

### <<Aspect 1-1>>

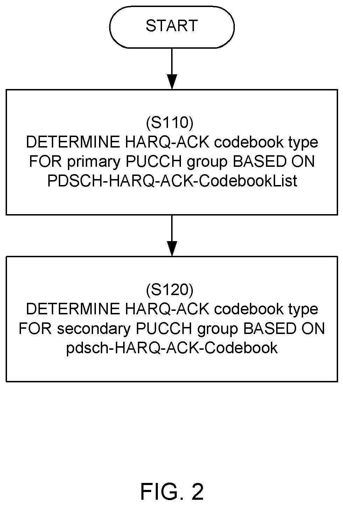

The UE may determine the HARQ-ACK codebook type for the primary PUCCH group based on the PDSCH-HARQ-ACK codebook type list (Fig. 2: S110). The UE may ignore the PDSCH-HARQ-ACK codebook type in determining the HARQ-ACK codebook type of the primary PUCCH group.

If the PDSCH-HARQ-ACK codebook type list indicates one HARQ-ACK codebook type (indicating to generate one HARQ-ACK codebook), the one HARQ-ACK codebook type may be associated with the PUCCH of the priority index 0. If the PDSCH-HARQ-ACK codebook type list indicates two HARQ-ACK codebook types (indicating to generate two HARQ-ACK codebooks), the first HARQ-ACK codebook type (value) may be associated with a PUCCH with a priority index 0, and the second HARQ-ACK codebook type (value) may be associated with a PUCCH with a priority index 1.

The UE may determine the HARQ-ACK codebook type for the secondary PUCCH group based on the PDSCH-HARQ-ACK codebook type (pdsch-HARQ-ACK-Codebook, first parameter) (Fig. 2: S120). The UE may use the PDSCH-HARQ-ACK codebook type in determining the HARQ-ACK codebook type of the secondary PUCCH group.

One HARQ-ACK codebook type indicated by the PDSCH-HARQ-ACK codebook type may be associated with the PUCCH of the priority index 0, or may be associated with the PUCCH of the priority index 0 and the PUCCH of the priority index 1.

According to this aspect, regardless of whether or not a PDSCH-HARQ-ACK codebook type list is configured, UE operations are the same, and UE configuration can be simplified (complexity can be reduced).

### <<Aspect 1-2>>

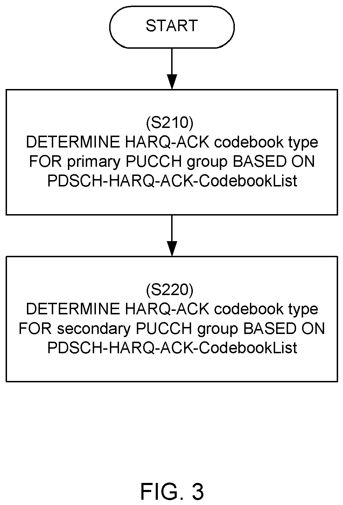

The UE may determine the HARQ-ACK codebook type for the primary PUCCH group based on the PDSCH-HARQ-ACK codebook type list (Fig. 3: S210). The UE may ignore the PDSCH-HARQ-ACK codebook type in determining the HARQ-ACK codebook type of the primary PUCCH group.

The UE may determine the HARQ-ACK codebook type for the secondary PUCCH group based on the PDSCH-HARQ-ACK codebook type list (Fig. 3: S220). The UE may ignore the PDSCH-HARQ-ACK codebook type in determining the HARQ-ACK codebook type of the secondary PUCCH group.

Determination of the HARQ-ACK codebook type may be according to any of Aspects 1-2-1 to 1-2-4.

### [Aspect 1-2-1]

The UE may use only the first HARQ-ACK codebook type in the PDSCH-HARQ-ACK codebook type list as the HARQ-ACK codebook type for the secondary PUCCH group.

If the PDSCH-HARQ-ACK codebook type list indicates one HARQ-ACK codebook type (indicating to generate one HARQ-ACK codebook) as a HARQ-ACK codebook type of the primary PUCCH group, the one HARQ-ACK codebook type may be associated with the PUCCH of the priority index 0. If the PDSCH-HARQ-ACK codebook type list indicates two HARQ-ACK codebook types (indicating to generate two HARQ-ACK codebooks), the first HARQ-ACK codebook type (value) may be associated with a PUCCH with a priority index 0, and the second HARQ-ACK codebook type (value) may be associated with a PUCCH with a priority index 1.

The HARQ-ACK codebook type for the secondary PUCCH group (both the HARQ-ACK codebook type for the PUCCH with priority index 0 in the secondary PUCCH group and the HARQ-ACK codebook type for the PUCCH with priority index 1 in the secondary PUCCH group) may be the first HARQ-ACK codebook type (value) in the PDSCH-HARQ-ACK codebook type list.

### [Aspect 1-2-2]

The UE may use only the second HARQ-ACK codebook type in the PDSCH-HARQ-ACK codebook type list as the HARQ-ACK codebook type for the secondary PUCCH group.

If the PDSCH-HARQ-ACK codebook type list indicates one HARQ-ACK codebook type (indicating to generate one HARQ-ACK codebook) as a HARQ-ACK codebook type of the primary PUCCH group, the one HARQ-ACK codebook type may be associated with the PUCCH of the priority index 0. If the PDSCH-HARQ-ACK codebook type list indicates two HARQ-ACK codebook types (indicating to generate two HARQ-ACK codebooks), the first HARQ-ACK codebook type (value) may be associated with a PUCCH with a priority index 0, and the second HARQ-ACK codebook type (value) may be associated with a PUCCH with a priority index 1.

The HARQ-ACK codebook type for the secondary PUCCH group (both the HARQ-ACK codebook type for the PUCCH with priority index 0 in the secondary PUCCH group and the HARQ-ACK codebook type for the PUCCH with priority index 1 in the secondary PUCCH group) may be the second HARQ-ACK codebook type (value) in the PDSCH-HARQ-ACK codebook type list.

According to Aspects 1-2-1/1-2-2, a same type as a HARQ-ACK codebook type actually used for the primary PUCCH group can be applied to the secondary PUCCH group, and UE configuration can be simplified (complexity can be reduced).

### [Aspect 1-2-3]

The UE may apply the first HARQ-ACK codebook type or the second HARQ-ACK codebook type (value) in the PDSCH-HARQ-ACK codebook type list based on the priority index as the HARQ-ACK codebook type for the primary PUCCH group and the secondary PUCCH group.

The HARQ-ACK codebook type for the PUCCH group with priority index 0 (both the HARQ-ACK codebook type for the PUCCH with priority index 0 in the primary PUCCH group and the HARQ-ACK codebook type for the PUCCH with priority index 0 in the secondary PUCCH group) may be the first HARQ-ACK codebook type (value) in the PDSCH-HARQ-ACK codebook type list. The HARQ-ACK codebook type for the PUCCH group with priority index 1 (both the HARQ-ACK codebook type for the PUCCH with priority index 1 in the primary PUCCH group and the HARQ-ACK codebook type for the PUCCH with priority index 1 in the secondary PUCCH group) may be the second HARQ-ACK codebook type (value) in the PDSCH-HARQ-ACK codebook type list.

According to Aspect 1-2-3, an optimal HARQ-ACK codebook type can be applied to the priority index.

### [Aspect 1-2-4]

The UE may apply the first HARQ-ACK codebook type or the second HARQ-ACK codebook type (value) in the PDSCH-HARQ-ACK codebook type list based on whether the PUCCH is the primary PUCCH group or the secondary PUCCH group.

The HARQ-ACK codebook type for the primary PUCCH group (both the HARQ-ACK codebook type for the PUCCH with priority index 0 in the primary PUCCH group and the HARQ-ACK codebook type for the PUCCH with priority index 1 in the primary PUCCH group) may be the first HARQ-ACK codebook type (value) in the PDSCH-HARQ-ACK codebook type list. The HARQ-ACK codebook type for the secondary PUCCH group (both the HARQ-ACK codebook type for the PUCCH with priority index 0 in the secondary PUCCH group and the HARQ-ACK codebook type for the PUCCH with priority index 1 in the secondary PUCCH group) may be the second HARQ-ACK codebook type (value) in the PDSCH-HARQ-ACK codebook type list.

According to Aspect 1-2-4, an optimal HARQ-ACK codebook type can be applied to each PUCCH group.

### <<Aspect 1-3>>

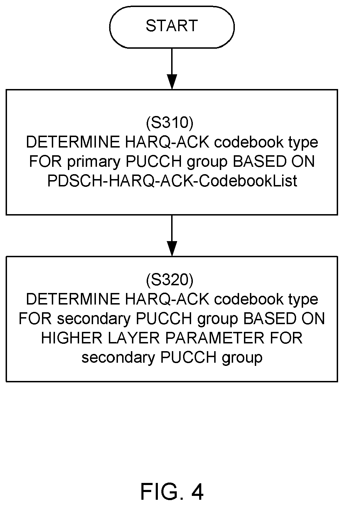

The UE may determine the HARQ-ACK codebook type for the primary PUCCH group based on the PDSCH-HARQ-ACK codebook type list (Fig. 4: S310). The UE may ignore the PDSCH-HARQ-ACK codebook type in determining the HARQ-ACK codebook type of the primary PUCCH group.

If the PDSCH-HARQ-ACK codebook type list indicates one HARQ-ACK codebook type (indicating to generate one HARQ-ACK codebook), the one HARQ-ACK codebook type may be associated with the PUCCH of the priority index 0. If the PDSCH-HARQ-ACK codebook type list indicates two HARQ-ACK codebook types (indicating to generate two HARQ-ACK codebooks), the first HARQ-ACK codebook type may be associated with a PUCCH with a priority index 0, and the second HARQ-ACK codebook type may be associated with a PUCCH with a priority index 1.

The UE may determine the HARQ-ACK codebook type for the secondary PUCCH group regardless of the HARQ-ACK codebook type for the primary PUCCH group.

Determination of the HARQ-ACK codebook type may be according to any of Aspects 1-3-1 and 1-3-2.

### [Aspect 1-3-1]

The UE may apply the HARQ-ACK codebook type specified in the specification to the secondary PUCCH group. For the secondary PUCCH group, a HARQ-ACK codebook type associated with the PUCCH with the priority index 0 and a HARQ-ACK codebook type associated with the PUCCH with the priority index 1 may be commonly defined, or may be separately defined.

### [Aspect 1-3-2]

The UE may apply the HARQ-ACK codebook type configured by the higher layer parameter to the secondary PUCCH group (Fig. 4: S320). The higher layer parameter may be a parameter for the secondary PUCCH group. The parameter for the secondary PUCCH group may be a PDSCH-HARQ-ACK codebook type for the secondary PUCCH group (for example, pdsch-HARQ-ACK-Codebook-secondaryPUCCHgroup, second parameter), or may be a PDSCH-HARQ-ACK codebook type list for the secondary PUCCH group (for example, pdsch-HARQ-ACK-CodebookList-secondaryPUCCHgroup, second list).

If multiple HARQ-ACK codebook types are configured by the higher layer parameter (for example, a PDSCH-HARQ-ACK codebook type list for the secondary PUCCH group), the first HARQ-ACK codebook type may be associated with the PUCCH with the priority index 0, and the second HARQ-ACK codebook type may be associated with the PUCCH with the priority index 1.

According to Aspect 1-3, a HARQ-ACK codebook type of a secondary PUCCH group can be flexibly determined regardless of the HARQ-ACK codebook type of the primary PUCCH group.

According to the first embodiment described above, even when the primary PUCCH group and the secondary PUCCH group are configured and the PDSCH-HARQ-ACK codebook type list is configured, the HARQ-ACK codebook type of the primary PUCCH group and the HARQ-ACK codebook type of the secondary PUCCH group can be appropriately determined.

### <Second Embodiment>

When the primary PUCCH group and the secondary PUCCH group are configured, and the PDSCH-HARQ-ACK codebook type list (PDSCH-HARQ-ACK-CodebookList-r16) is configured, and the PDSCH-HARQ-ACK codebook type for the secondary PUCCH group (for example, pdsch-HARQ-ACK-Codebook-secondaryPUCCHgroup) is configured, the determining of the HARQ-ACK codebook type may be according to any of the first embodiment (Aspects 1-1 to 1-3).

When in accordance with Aspect 1-1 or 1-2, the UE may ignore the PDSCH-HARQ-ACK codebook type for the secondary PUCCH group. When in accordance with Aspect 1-3, the higher layer parameter may be a PDSCH-HARQ-ACK codebook type for a secondary PUCCH group.

According to the second embodiment described above, even when the primary PUCCH group and the secondary PUCCH group are configured, and the PDSCH-HARQ-ACK codebook type list is configured, and the PDSCH-HARQ-ACK codebook type for the secondary PUCCH group is configured, the HARQ-ACK codebook type of the primary PUCCH group and the HARQ-ACK codebook type of the secondary PUCCH group can be appropriately determined.

### <Third Embodiment>

When the primary PUCCH group and the secondary PUCCH group are configured, and the PDSCH-HARQ-ACK codebook type list (PDSCH-HARQ-ACK-CodebookList-r16) is configured, and the PDSCH-HARQ-ACK codebook type for the secondary PUCCH group list (for example, pdsch-HARQ-ACK-CodebookList-secondaryPUCCHgroup) is configured, the determining of the HARQ-ACK codebook type may be according to any of the first embodiment (Aspects 1-1 to 1-3).

When in accordance with Aspect 1-1 or 1-2, the UE may ignore the PDSCH-HARQ-ACK codebook type for the secondary PUCCH group. When in accordance with Aspect 1-3, the higher layer parameter may be a PDSCH-HARQ-ACK codebook type list for a secondary PUCCH group.

According to the third embodiment described above, even when the primary PUCCH group and the secondary PUCCH group are configured, and the PDSCH-HARQ-ACK codebook type list is configured, and the PDSCH-HARQ-ACK codebook type list for the secondary PUCCH group is configured, the HARQ-ACK codebook type of the primary PUCCH group and the HARQ-ACK codebook type of the secondary PUCCH group can be appropriately determined.

### (Radio communication system)

Hereinafter, a configuration of a radio communication system according to one embodiment of the present disclosure will be described. In this radio communication system, communication is performed by using any one of or a combination of the radio communication methods according to the above-described embodiments of the present disclosure.

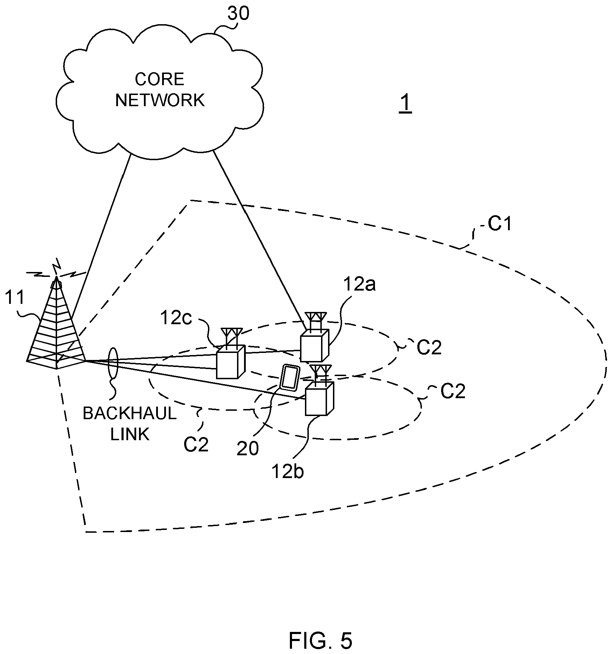

Fig. 5 is a diagram illustrating an example of a schematic configuration of a radio communication system according to one embodiment. A radio communication system 1 may be a system that implements communication using long term evolution (LTE), 5th generation mobile communication system New Radio (5G NR), and the like drafted as the specification by third generation partnership project (3GPP).

Further, the radio communication system 1 may support dual connectivity (multi-RAT dual connectivity (MR-DC)) between a plurality of radio access technologies (RATs). The MR-DC may include dual connectivity between LTE (evolved universal terrestrial radio access (E-UTRA)) and NR (E-UTRA-NR dual connectivity (EN-DC)), dual connectivity between NR and LTE (NR-E-UTRA dual connectivity (NE-DC)), and the like.

In EN-DC, an LTE (E-UTRA) base station (eNB) is a master node (MN), and an NR base station (gNB) is a secondary node (SN). In the NE-DC, an NR base station (gNB) is the MN, and an LTE (E-UTRA) base station (eNB) is the SN.

The radio communication system 1 may support dual connectivity between a plurality of base stations in the same RAT (for example, dual connectivity in which both the MN and the SN are NR base stations (gNB) (NR-NR dual connectivity (NN-DC)).

The radio communication system 1 may include a base station 11 that forms a Macro cell C1 with a relatively wide coverage, and base stations 12 (12a to 12c) disposed in the Macro cell C1, each of which forms a Small cell C2 narrower than the Macro cell C1. A user terminal 20 may be positioned in at least one cell. The arrangement, number, and the like of cells and the user terminals 20 are not limited to the aspects illustrated in the drawings. Hereinafter, the base stations 11 and 12 will be collectively referred to as a "base station 10", unless these base stations are distinguished from each other.

The user terminal 20 may be connected to at least one of the plurality of base stations 10. The user terminal 20 may use at least one of carrier aggregation (CA) using a plurality of component carriers (CC) and dual connectivity (DC).

Each CC may be included in at least one of a first Frequency Range 1 (FR1) and/or a second Frequency Range 2 (FR2). The macro cell C1 may be included in FR1, and the small cell C2 may be included in FR2. For example, FR1 may be a frequency range of 6 GHz or less (sub-6 GHz), and FR2 may be a frequency range higher than 24 GHz (above-24 GHz). Note that frequency ranges, definitions, or the like of the FR1 and FR2 are not limited to these, and, for example, the FR1 may correspond to a higher frequency range than the FR2.

Further, the user terminal 20 may perform communication in each CC by using at least one of Time Division Duplex (TDD) and Frequency Division Duplex (FDD).

The plurality of base stations 10 may be connected in a wired (e.g., an optical fiber or an X2 interface in compliance with common public radio interface (CPRI)) or wireless manner (e.g., NR communication). For example, in a case where NR communication is used as a backhaul between the base stations 11 and 12, the base station 11 corresponding to a higher-level station may be referred to as an integrated access backhaul (IAB) donor, and the base station 12 corresponding to a relay station (relay) may be referred to as an IAB node.

The base station 10 may be connected to a core network 30 via another base station 10 or directly. The core network 30 may include, for example, at least one of an Evolved Packet Core (EPC), a 5G Core Network (5GCN), or a Next Generation Core (NGC), or the like.

The user terminal 20 may be a terminal corresponding to at least one of communication methods such as LTE, LTE-A, or 5G.

In the radio communication system 1, a radio access scheme based on orthogonal frequency division multiplexing (OFDM) may be used. For example, in at least one of downlink (DL) or uplink (UL), cyclic prefix OFDM (CP-OFDM), discrete Fourier transform spread OFDM (DFT-s-OFDM), orthogonal frequency division multiple access (OFDMA), single carrier frequency division multiple access (SC-FDMA), and the like, may be used.

A radio access method may also be referred to as a waveform. Note that, in the radio communication system 1, another radio access method (for example, another single carrier transmission method or another multicarrier transmission method) may be used as a radio access method for the UL or the DL.

In the radio communication system 1, as a downlink channel, a physical downlink shared channel (PDSCH), a physical broadcast channel (PBCH), a physical downlink control channel (PDCCH), or the like, shared by the user terminals 20 may be used.

Further, in the radio communication system 1, as an uplink channel, a physical uplink shared channel (PUSCH), a physical uplink control channel (PUCCH), a physical random access channel (PRACH), or the like, shared by the user terminals 20 may be used.

User data, higher layer control information, a system information block (SIB), and the like are transmitted on the PDSCH. The PUSCH may transmit the user data, higher layer control information, and the like. Furthermore, a master information block (MIB) may be transmitted on the PBCH.

Lower layer control information may be transmitted by the PDCCH. The lower layer control information may include, for example, Downlink Control Information (DCI) including scheduling information of at least one of the PDSCH or the PUSCH.

Note that DCI that schedules a PDSCH may also be referred to as DL assignment, DL DCI, or the like, and DCI that schedules a PUSCH may also be referred to as a UL grant, UL DCI, or the like. Note that a PDSCH may be replaced with DL data, and a PUSCH may be replaced with UL data.

For detection of the PDCCH, a control resource set (CORESET) and a search space may be used. The CORESET corresponds to a resource that searches for DCI. The search space corresponds to a search area and a search method for PDCCH candidates. One CORESET may be associated with one or more search spaces. The UE may monitor a CORESET associated with a certain Search Space on the basis of a Search Space configuration.

One search space may correspond to a PDCCH candidate corresponding to one or more aggregation levels. One or more search spaces may be referred to as a search space set. Note that "Search Space", "Search Space set", "Search Space configuration", "Search Space set configuration", "CORESET", "CORESET configuration", and the like in the present disclosure may be replaced with one another.

Uplink Control Information (UCI) including at least one of Channel State Information (CSI), delivery acknowledgement information (which may be referred to as, for example, a hybrid automatic repeat request acknowledgement (HARQ-ACK), ACK/NACK, or the like), or a Scheduling Request (SR) may be transmitted by the PUCCH. A random access preamble for establishing connection with a cell may be transmitted on the PRACH.

Note that, in the present disclosure, downlink, uplink, or the like may be expressed without "link". Furthermore, various channels may be expressed without adding "Physical" to the beginning thereof.

In the radio communication system 1, a synchronization signal (SS), a downlink reference signal (DL-RS), and the like, may be transmitted. In the radio communication system 1, a Cell-Specific Reference Signal (CRS), a Channel State Information Reference Signal (CSI-RS), a DeModulation Reference Signal (DMRS), a Positioning Reference Signal (PRS), a Phase Tracking Reference Signal (PTRS), or the like, may be transmitted as the DL-RS.

The synchronization signal may be, for example, at least one of a Primary Synchronization Signal (PSS) and a Secondary Synchronization Signal (SSS). A signal block including the SS (PSS or SSS) and the PBCH (and the DMRS for the PBCH) may be referred to as an SS/PBCH block, an SS block (SSB), or the like. Note that, the SS, the SSB, or the like may also be referred to as a reference signal.

Furthermore, in the radio communication system 1, a measurement reference signal (sounding reference signal (SRS)), a demodulation reference signal (DMRS), or the like may be transmitted as an uplink reference signal (UL-RS). Note that, DMRSs may be referred to as "user terminal-specific reference signals (UE-specific Reference Signals)".

### (Base Station)

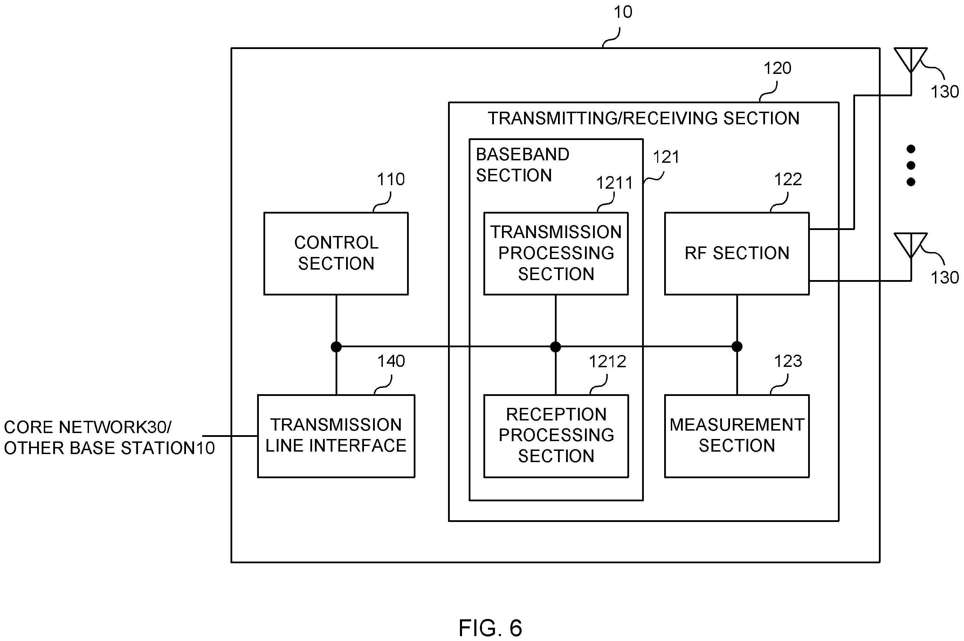

Fig. 6 is a diagram illustrating an example of a configuration of the base station according to one embodiment. The base station 10 includes a control section 110, a transmitting/receiving section 120, a transmitting/receiving antenna 130, and a transmission line interface 140. Note that one or more control sections 110, one or more transmitting/receiving sections 120, one or more transmitting/receiving antennas 130, and one or more transmission line interfaces 140 may be included.

Note that, although this example mainly describes a functional block which is a characteristic part of the present embodiment, the base station 10 may be assumed also to have another functional block that is necessary for radio communication. Part of processing of each unit described below may be omitted.

The control section 110 controls an entire base station 10. The control section 110 can include a controller, a control circuit, or the like, which is described on the basis of common recognition in a technical field according to the present disclosure.

The control section 110 may control signal generation, scheduling (for example, resource allocation or mapping), or the like. The control section 110 may control transmission/reception, measurement, and the like using the transmitting/receiving section 120, the transmitting/receiving antenna 130, and the transmission line interface 140. The control section 110 may generate data to be transmitted as a signal, control information, a sequence, and the like, and may forward the data, the control information, the sequence, and the like to the transmitting/receiving section 120. The control section 110 may perform call processing (such as configuration or releasing) of a communication channel, management of a state of the base station 10, management of a radio resource, or the like.

The transmitting/receiving section 120 may include a baseband section 121, a radio frequency (RF) section 122, and a measurement section 123. The baseband section 121 may include a transmission processing section 1211 and a reception processing section 1212. The transmitting/receiving section 120 can include a transmitter/receiver, an RF circuit, a base band circuit, a filter, a phase shifter, a measurement circuit, a transmission/reception circuit, or the like, which is described on the basis of common recognition in a technical field according to the present disclosure.

The transmitting/receiving section 120 may be constituted as an integrated transmitting/receiving section, or may be constituted by a transmitting section and a receiving section. The transmitting section may include the transmission processing section 1211 and the RF section 122. The receiving section may include the reception processing section 1212, the RF section 122, and the measurement section 123.

The transmitting/receiving antenna 130 can include an antenna, for example, an array antenna, or the like, which is described on the basis of common recognition in a technical field according to the present disclosure.

The transmitting/receiving section 120 may transmit the above-described downlink channel, synchronization signal, Downlink Reference Signal, or the like. The transmitting/receiving section 120 may receive the above-described uplink channel, Uplink Reference Signal, or the like.

The transmitting/receiving section 120 may form at least either a transmission beam or a reception beam by using digital beam forming (for example, precoding), analog beam forming (for example, phase rotation), or the like.

The transmitting/receiving section 120 (transmission processing section 1211) may perform packet data convergence protocol (PDCP) layer processing, radio link control (RLC) layer processing (for example, RLC retransmission control), medium access control (MAC) layer processing (for example, HARQ retransmission control), and the like, on, for example, data, control information, and the like, acquired from the control section 110, to generate a bit string to be transmitted.

The transmitting/receiving section 120 (transmission processing section 1211) may perform transmission processing such as channel encoding (which may include error correcting encoding), modulation, mapping, filtering processing, Discrete Fourier Transform (DFT) processing (if necessary), Inverse Fast Fourier Transform (IFFT) processing, precoding, or digital-analog conversion on the bit string to be transmitted, to output a baseband signal.

The transmitting/receiving section 120 (RF section 122) may perform modulation to a radio frequency range, filtering processing, amplification, or the like on the baseband signal, and may transmit a signal in the radio frequency band via the transmitting/receiving antenna 130.

Meanwhile, the transmitting/receiving section 120 (RF section 122) may perform amplification, filtering processing, demodulation to a baseband signal, or the like on the signal in the radio frequency range received by the transmitting/receiving antenna 130.

The transmitting/receiving section 120 (reception processing section 1212) may apply reception processing such as analog-digital conversion, fast Fourier transform (FFT) processing, inverse discrete Fourier transform (IDFT) processing (if necessary), filtering processing, demapping, demodulation, decoding (which may include error correction decoding), MAC layer processing, RLC layer processing, or PDCP layer processing on the acquired baseband signal, to acquire user data, and the like.

The transmitting/receiving section 120 (measurement section 123) may perform measurement on the received signal. For example, the measurement section 123 may perform radio resource management (RRM), channel state information (CSI) measurement, and the like based on the received signal. The measurement section 123 may measure received power (for example, reference signal received power (RSRP)), received quality (for example, reference signal received quality (RSRQ), a signal to interference plus noise ratio (SINR), a signal to noise ratio (SNR)), signal strength (for example, received signal strength indicator (RSSI)), propagation path information (for example, CSI), and the like. The measurement result may be outputted to the control section 110.

The transmission line interface 140 may transmit/receive a signal (backhaul signaling) to and from an apparatus included in the core network 30, another base stations 10, or the like, and may acquire, transmit, or the like user data (user plane data), control plane data, or the like for the user terminal 20.

Note that a transmitting section and a receiving section of the base station 10 in the present disclosure may include at least one of the transmitting/receiving section 120, the transmitting/receiving antenna 130, or the transmission line interface 140.

The transmitting/receiving section 120 may transmit TCI state information indicating a plurality of transmission configuration instruction (TCI) states applicable to a plurality of types of channels, and may transmit first downlink control information indicating one TCI state among the plurality of TCI states. The control section 110 may apply the one TCI state to the first signal after a timing at which a specific time has elapsed from either the first downlink control information or the first uplink channel based on the first downlink control information.

The transmitting/receiving section 120 may transmit a first configuration of a primary physical uplink control channel (PUCCH) group, a second configuration of a secondary PUCCH group, and a first list indicating one or more hybrid automatic repeat request-acknowledgement (HARQ-ACK) codebook types for a physical downlink shared channel (PDSCH). The control section 110 may control reception of one or more first HARQ-ACK codebook types for the primary PUCCH group and reception of one or more second HARQ-ACK codebook types for the secondary PUCCH group. The first HARQ-ACK codebook type may be determined based on the first list. The second HARQ-ACK codebook type may be determined based on at least one of the first list, a higher layer parameter, and a specification.

### (User Terminal)

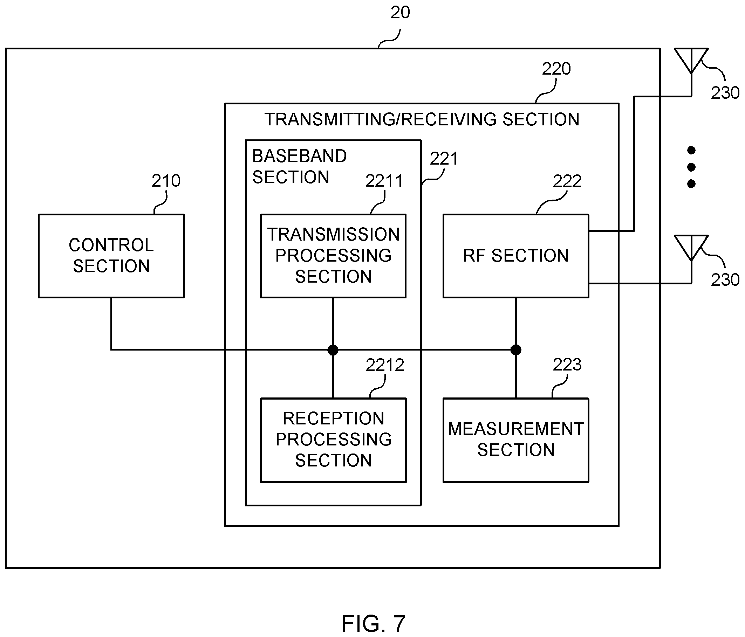

Fig. 7 illustrates an example of a configuration of the user terminal according to one embodiment. The user terminal 20 includes a control section 210, a transmitting/receiving section 220, and a transmitting/receiving antenna 230. Note that, one or more each of the control sections 210, the transmitting/receiving sections 220, and the transmitting/receiving antennas 230 may be included.

Note that, although this example mainly describes functional blocks of a characteristic part of the present embodiment, it may be assumed that the user terminal 20 includes other functional blocks that are necessary for radio communication as well. Part of processing of each unit described below may be omitted.

The control section 210 controls the entire user terminal 20. The control section 210 can include a controller, a control circuit, and the like that are described on the basis of common recognition in the technical field related to the present disclosure.

The control section 210 may control signal generation, mapping, and the like. The control section 210 may control transmission/reception, measurement, and the like using the transmitting/receiving section 220 and the transmitting/receiving antenna 230. The control section 210 may generate data, control information, a sequence, and the like to be transmitted as signals, and may transfer the data, control information, sequence, and the like to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can include a transmitter/receiver, an RF circuit, a baseband circuit, a filter, a phase shifter, a measurement circuit, a transmitting/receiving circuit, and the like that are described on the basis of common recognition in the technical field related to the present disclosure.

The transmitting/receiving section 220 may be formed as an integrated transmitting/receiving section, or may include a transmitting section and a receiving section. The transmitting section may include the transmission processing section 2211 and the RF section 222. The receiving section may include the reception processing section 2212, the RF section 222, and the measurement section 223.

The transmitting/receiving antenna 230 can include an antenna described on the basis of common recognition in the technical field related to the present disclosure, for example, an array antenna.

The transmitting/receiving section 220 may receive the above-described downlink channel, synchronization signal, downlink reference signal, and the like. The transmitting/receiving section 220 may transmit the above-described uplink channel, uplink reference signal, and the like.

The transmitting/receiving section 220 may form at least one of a transmission beam and a reception beam by using digital beam forming (for example, precoding), analog beam forming (for example, phase rotation), and the like.

The transmitting/receiving section 220 (transmission processing section 2211) may perform PDCP layer processing, RLC layer processing (for example, RLC retransmission control), MAC layer processing (for example, HARQ retransmission control), and the like on, for example, data, control information, and the like acquired from the control section 210, to generate a bit string to be transmitted.

The transmitting/receiving section 220 (transmission processing section 2211) may perform transmission processing such as channel encoding (which may include error correction encoding), modulation, mapping, filtering processing, DFT processing (if necessary), IFFT processing, precoding, or digital-analog conversion on the bit string to be transmitted, to output a baseband signal.

Note that, whether or not to apply DFT processing may be determined on the basis of configuration of transform precoding. When the transform precoding is enabled for a channel (for example, PUSCH), the transmitting/receiving section 220 (transmission processing section 2211) may perform DFT processing as the transmission processing to transmit the channel by using a DFT-s-OFDM waveform, and when not, DFT processing does not have to be performed as the transmission processing.

The transmitting/receiving section 220 (RF section 222) may perform modulation to a radio frequency range, filtering processing, amplification, and the like on the baseband signal, to transmit a signal in the radio frequency range via the transmitting/receiving antenna 230.

Meanwhile, the transmitting/receiving section 220 (RF section 222) may perform amplification, filtering processing, demodulation to a baseband signal, and the like on the signal in the radio frequency range received by the transmitting/receiving antenna 230.

The transmitting/receiving section 220 (reception processing section 2212) may apply reception processing such as analog-digital conversion, FFT processing, IDFT processing (if necessary), filtering processing, demapping, demodulation, decoding (which may include error correction decoding), MAC layer processing, RLC layer processing, or PDCP layer processing on the acquired baseband signal, to acquire user data and the like.

The transmitting/receiving section 220 (measurement section 223) may perform measurement on the received signal. For example, the measurement section 223 may perform RRM measurement, CSI measurement, and the like based on the received signal. The measurement section 223 may measure received power (for example, RSRP), received quality (for example, RSRQ, SINR, or SNR), signal strength (for example, RSSI), propagation path information (for example, CSI), and the like. The measurement result may be output to the control section 210.

Note that the transmitting section and the receiving section of the user terminal 20 in the present disclosure may be constituted by at least one of the transmitting/receiving section 220 and the transmitting/receiving antenna 230.

The transmitting/receiving section 220 may receive a first configuration of a primary physical uplink control channel (PUCCH) group, a second configuration of a secondary PUCCH group, and a first list indicating one or more hybrid automatic repeat request-acknowledgement (HARQ-ACK) codebook types for a physical downlink shared channel (PDSCH). The control section 210 may determine one or more first HARQ-ACK codebook types for the primary PUCCH group based on the first list, and determine one or more second HARQ-ACK codebook types for the secondary PUCCH group based on at least one of the first list, a higher layer parameter, and a specification.

The higher layer parameter may be one of a first parameter indicating one HARQ-ACK codebook type for the primary PUCCH group (Aspect 1-1), a second parameter indicating one HARQ-ACK codebook type for the secondary PUCCH group (Aspect 1-3-2), and a second list indicating one or more HARQ-ACK codebook types for the secondary PUCCH group (Aspect 1-3-2).

The control section 210 may apply one of a first value in the first list, a second value in the first list, and a value corresponding to a priority index in the first list to the one or more first HARQ-ACK codebook types and the one or more second HARQ-ACK codebook types (Aspect 1-2).

When the higher layer parameter is the second list, and the second list indicates two HARQ-ACK codebook types, the control section 210 may apply a first value in the second list to a PUCCH with a priority index 0 to the secondary PUCCH group, and may apply a second value in the second list to a PUCCH with a priority index 1 to the secondary PUCCH group (Aspect 1-3-2).

### (Hardware Configuration)

Note that the block diagrams that have been used to describe the above embodiments illustrate blocks in functional units. These functional blocks (components) may be implemented in arbitrary combinations of at least one of hardware or software. Further, the method for implementing each functional block is not particularly limited. That is, each functional block may be implemented by a single apparatus physically or logically aggregated, or may be implemented by directly or indirectly connecting two or more physically or logically separate apparatuses (in a wired manner, a radio manner, or the like, for example) and using these apparatuses. The functional blocks may be implemented by combining software with the above-described single apparatus or the above-described plurality of apparatuses.

Here, the function includes, but is not limited to, deciding, determining, judging, calculating, computing, processing, deriving, investigating, searching, ascertaining, receiving, transmitting, outputting, accessing, solving, selecting, choosing, establishing, comparing, assuming, expecting, regarding, broadcasting, notifying, communicating, forwarding, configuring, reconfiguring, allocating, mapping, assigning, and the like. For example, a functional block (component) that has a transmission function may be referred to as a transmitting section (transmitting unit), a transmitter, and the like. In any case, as described above, the implementation method is not particularly limited.

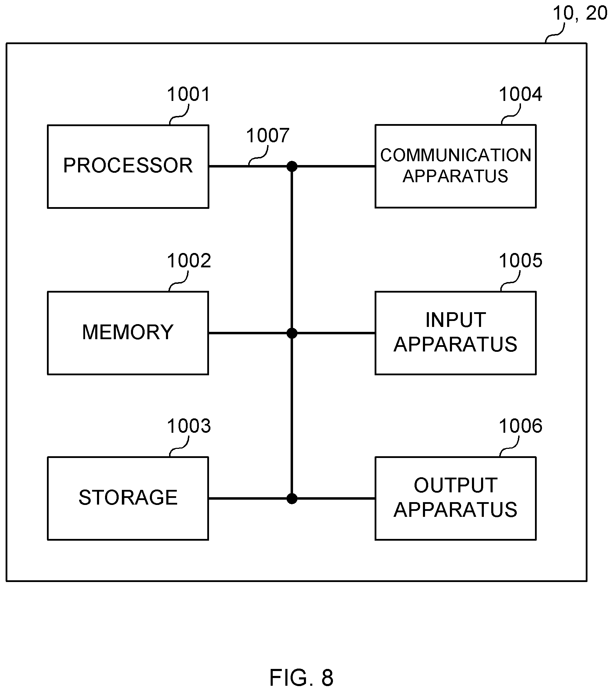

For example, the base station, the user terminal, and the like according to one embodiment of the present disclosure may function as a computer that executes the processing of the radio communication method of the present disclosure. Fig. 8 illustrates an example of a hardware configuration of the base station and the user terminal according to one embodiment. Physically, the above-described base station 10 and user terminal 20 may be formed as a computer apparatus that includes a processor 1001, a memory 1002, a storage 1003, a communication apparatus 1004, an input apparatus 1005, an output apparatus 1006, a bus 1007, and the like.

Note that, in the present disclosure, the terms such as an apparatus, a circuit, a device, a section, and a unit can be replaced with one another. The hardware configuration of the base station 10 and the user terminal 20 may be configured to include one or a plurality of apparatuses illustrated in the figures, or may be configured without including some apparatuses.

For example, although only one processor 1001 is illustrated, a plurality of processors may be provided. Further, the processing may be executed by one processor, or the processing may be executed by two or more processors simultaneously or sequentially, or using other methods. Note that the processor 1001 may be implemented with one or more chips.

Each of functions of the base station 10 and the user terminal 20 is implemented by causing given software (program) to be read on hardware such as the processor 1001 and the memory 1002, thereby causing the processor 1001 to perform operation, control communication via the communication apparatus 1004, and control at least one of reading and writing of data in the memory 1002 and the storage 1003.

For example, the processor 1001 may control the whole computer by running an operating system. The processor 1001 may be implemented by a central processing unit (CPU) including an interface with peripheral equipment, a control apparatus, an operation apparatus, a register, and the like. For example, at least a part of the above-described control section 110 (210), transmitting/receiving section 120 (220), and the like may be implemented by the processor 1001.

The processor 1001 reads a program (program code), a software module, and data from at least one of the storage 1003 and the communication apparatus 1004, into the memory 1002, and executes various pieces of processing (various processing) in accordance therewith. As the program, a program that causes a computer to execute at least a part of the operation described in the above-described embodiment is used. For example, the control section 110 (210) may be implemented by a control program that is stored in the memory 1002 and operates in the processor 1001, and another functional block may be implemented similarly.

The memory 1002 is a computer-readable recording medium, and may include, for example, at least one of a read only memory (ROM), an erasable programmable ROM (EPROM), an electrically EPROM (EEPROM), a random access memory (RAM), and other appropriate storage media. The memory 1002 may be referred to as a register, a cache, a main memory (primary storage apparatus), and the like. The memory 1002 can store a program (program code), a software module, and the like, which can be executed for implementing the radio communication method according to one embodiment of the present disclosure.

The storage 1003 is a computer-readable recording medium, and may include, for example, at least one of a flexible disk, a floppy (registered trademark) disk, a magneto-optical disk (e.g., compact disc ROM (CD-ROM), digital versatile disc, Blu-ray (registered trademark) disk), a removable disk, a hard disk drive, a smart card, a flash memory device (e.g., card, stick, and key drive), a magnetic stripe, a database, a server, and other appropriate storage media. The storage 1003 may be referred to as an auxiliary storage apparatus.

The communication apparatus 1004 is hardware (transmission/reception device) for inter-computer communication via at least one of a wired network and a wireless network, and is also referred to as, for example, a network device, a network controller, a network card, a communication module, and the like. The communication apparatus 1004 may include a high frequency switch, a duplexer, a filter, a frequency synthesizer, and the like in order to implement, for example, at least one of frequency division duplex (FDD) or time division duplex (TDD). For example, the transmitting/receiving section 120 (220), the transmitting/receiving antenna 130 (230), and the like described above may be implemented by the communication apparatus 1004. The transmitting/receiving section 120 (220) may be implemented by physically or logically separated transmitting section 120a (220a) and receiving section 120b (220b).

The input apparatus 1005 is an input device for receiving input from the outside (e.g., keyboard, mouse, microphone, switch, button, and sensor). The output apparatus 1006 is an output device that performs output to the outside (for example, a display, a speaker, a light emitting diode (LED) lamp, or the like). Note that the input apparatus 1005 and the output apparatus 1006 may be provided in an integrated configuration (e.g., touch panel).

Apparatuses such as the processor 1001 and the memory 1002 are connected by the bus 1007 for communicating information. The bus 1007 may include a single bus, or may include buses that differs between apparatuses.

The base station 10 and the user terminal 20 may include hardware such as a microprocessor, a digital signal processor (DSP), an application specific integrated circuit (ASIC), a programmable logic device (PLD), and a field programmable gate array (FPGA), and a part or all of the functional blocks may be implemented by the hardware. For example, the processor 1001 may be implemented by using at least one of these pieces of hardware (at least one of these hardware).

### (Variations)

Note that terms described in the present disclosure and terms necessary for understanding the present disclosure may be replaced with terms that have the same or similar meanings. For example, a channel, a symbol, and a signal (signal or signaling) may be replaced with one another. Further, the signal may be a message. The reference signal can be abbreviated as an RS, and may be referred to as a pilot, a pilot signal, and the like, depending on which standard applies. A component carrier (CC) may be referred to as a cell, a frequency carrier, a carrier frequency, and the like.

A radio frame may include one or a plurality of durations (frames) in a time domain. Each of the one or more periods (frames) included in the radio frame may be referred to as a subframe. Further, the subframe may include one or more slots in the time domain. The subframe may have a fixed time length (e.g., 1 ms) that does not depend on numerology.

Here, the numerology may be a communication parameter applied to at least one of transmission and reception of a signal or a channel. The numerology may indicate at least one of, for example, subcarrier spacing (SCS), a bandwidth, a symbol length, a cyclic prefix length, a transmission time interval (TTI), the number of symbols per TTI, radio frame configuration, specific filtering processing performed by a transceiver in a frequency domain, and specific windowing processing performed by the transceiver in a time domain.

The slot may include one or a plurality of symbols (orthogonal frequency division multiplexing (OFDM) symbol, single carrier frequency division multiple access (SC-FDMA) symbol, and the like) in the time domain. The slot may be a time unit based on the numerology.

The slot may include a plurality of mini slots. Each mini slot may include one or more symbols in the time domain. Further, the mini slot may be referred to as a sub-slot. Each mini slot may include fewer symbols than the slot. A PDSCH (or PUSCH) transmitted in a time unit larger than the mini slot may be referred to as "PDSCH (PUSCH) mapping type A". A PDSCH (or PUSCH) transmitted by using a mini slot may be referred to as a PDSCH (PUSCH) mapping type B.

A radio frame, a subframe, a slot, a mini slot, and a symbol all represent a time unit at the time of transmitting a signal. The radio frame, the subframe, the slot, the mini slot, and the symbol may be called by other applicable names, respectively. Note that time units such as a frame, a subframe, a slot, a mini slot, and a symbol in the present disclosure may be replaced with one another.

For example, one subframe may be referred to as a TTI, a plurality of consecutive subframes may be referred to as a TTI, or one slot or one mini slot may be referred to as a TTI. That is, at least one of the subframe or the TTI may be a subframe (1 ms) in the existing LTE, may be a period shorter than 1 ms (for example, one to thirteen symbols), or may be a period longer than 1 ms. Note that the unit to represent the TTI may be referred to not as a subframe but as a slot, a mini slot, and the like.

Here, the TTI refers to a minimum time unit of scheduling in radio communication, for example. For example, in the LTE system, a base station performs scheduling to allocate radio resources (a frequency bandwidth, transmission power, and the like that can be used in each user terminal) to each user terminal in TTI units. Note that the definition of the TTI is not limited thereto.

The TTI may be a transmission time unit of channel-encoded data packets (transport blocks), code blocks, codewords, and the like, or may be a processing unit in scheduling, link adaptation, and the like. Note that, when a TTI is given, a time section (e.g., number of symbols) in which a transport block, a code block, a codeword, and the like are actually mapped may be shorter than the TTI.

Note that, when one slot or one mini slot is referred to as a TTI, one or more TTIs (i.e., one or more slots or one or more mini slots) may be the minimum time unit of scheduling. The number of slots (number of mini slots) constituting the minimum time unit of scheduling may be controlled.

A TTI having a time length of 1 ms may be referred to as a usual TTI (TTI in 3GPP Rel. 8 to 12), a normal TTI, a long TTI, a usual subframe, a normal subframe, a long subframe, a slot, and the like. A TTI shorter than the usual TTI may be referred to as a shortened TTI, a short TTI, a partial TTI (or fractional TTI), a shortened subframe, a short subframe, a mini slot, a subslot, a slot, and the like.

Note that a long TTI (e.g., usual TTI and subframe) may be replaced with a TTI having a time length exceeding 1 ms, and a short TTI (e.g., shortened TTI) may be replaced with a TTI having a TTI length less than the TTI length of a long TTI and equal to or more than 1 ms.

A resource block (RB) is a unit of resource allocation in a time domain and a frequency domain, and may include one or a plurality of consecutive subcarriers in the frequency domain. The number of subcarriers included in the RB may be the same regardless of the numerology, and may be twelve, for example. The number of subcarriers in the RB may be determined based on the numerology.

The RB may include one or a plurality of symbols in the time domain, and may have a length of one slot, one mini slot, one subframe, or one TTI. Each of one TTI, one subframe, and the like may include one or a plurality of resource blocks.

Note that one or a plurality of RBs may be referred to as a physical resource block (PRB), a sub-carrier group (SCG), a resource element group (REG), a PRB pair, an RB pair, and the like.

The resource block may include one or a plurality of resource elements (REs). For example, one RE may be a radio resource domain of one subcarrier and one symbol.

A bandwidth part (BWP) (which may be referred to as partial bandwidth and the like) may represent a subset of consecutive common resource blocks (RBs) for a numerology in a carrier. Here, the common RB may be specified by the index of the RB based on a common reference point of the carrier. The PRB may be defined in a BWP, and be numbered in the BWP.

The BWP may include a BWP for UL (UL BWP) and a BWP for DL (DL BWP). For the UE, one or a plurality of BWPs may be configured in one carrier.

At least one of the configured BWPs may be active, and it need not be assumed that the UE transmits/receives a given signal/channel outside the active BWP. Note that "cell", "carrier", etc. in the present disclosure may be replaced with "BWP".

Note that the structures of the above-described radio frame, subframe, slot, mini slot, symbol, and the like are merely examples. For example, configurations such as the number of subframes in a radio frame, the number of slots per subframe or radio frame, the number of mini slots in a slot, the number of symbols and RBs in a slot or a mini slot, the number of subcarriers in an RB, the number of symbols in a TTI, a symbol length, a cyclic prefix (CP) length, and the like can be variously changed.

The information, parameters, and the like described in the present disclosure may be represented by using an absolute value, a relative value from a given value, or other corresponding information. For example, radio resources may be instructed by a given index.

The names used for parameters and the like in the present disclosure are in no respect limitations. Further, any mathematical expression or the like that uses these parameters may differ from those explicitly disclosed in the present disclosure. Since various channels (e.g., PUCCH and PDCCH) and information elements can be identified by any suitable name, various names allocated to these various channels and information elements are in no respect limitations.

The information, signals, and the like described in the present disclosure may be represented by using any of a variety of different pieces of technology (different technology). For example, data, instructions, commands, information, signals, bits, symbols, and chips, which may be referenced throughout the above description, may be represented by voltages, currents, electromagnetic waves, magnetic fields or particles, optical fields or photons, or any combination thereof.

The information, signals, and the like can be output in at least one of a direction from a higher layer to a lower layer and a direction from a lower layer to a higher layer. The information, signals, and the like may be input/output via a plurality of network nodes.

The input/output information, signals, and the like may be stored in a specific location (e.g., in memory), or may be managed by using a management table. The information, signals, and the like to be input and output can be overwritten, updated, or appended. The output information, signals, and the like may be deleted. The input information, signals, and the like may be transmitted to another apparatus.

Information may be announced not only in the aspect/embodiments described in the present disclosure but in another method. For example, information may be announced in the present disclosure by physical layer signaling (e.g., downlink control information (DCI), uplink control information (UCI)), higher layer signaling (e.g., radio resource control (RRC) signaling, broadcast information (master information block (MIB), system information block (SIB), and the like), medium access control (MAC) signaling), another signal, or a combination thereof.

Note that the physical layer signaling may be referred to as layer 1/layer 2 (L1/L2) control information (L1/L2 control signal), L1 control information (L1 control signal), and the like. Further, the RRC signaling may be referred to as an RRC message, and may be, for example, an RRC Connection Setup message, an RRC Connection Reconfiguration message, and so on. The MAC signaling may be announced by using, for example, a MAC control element (CE).

Predetermined information may be announced (e.g., "being X" may be announced) not only explicitly but implicitly (e.g., by not reporting the given information, or by reporting another piece of information).

Decisions may be made in a value represented by one bit (0 or 1), in a Boolean value represented by true or false, or in comparison of numerical values (e.g., comparison against given value).

Regardless of being referred to as software, firmware, middleware, a microcode, or a hardware description language, or by other names, software should be interpreted broadly so as to mean instructions, instruction sets, codes, code segments, program codes, programs, subprograms, software modules, applications, software applications, software packages, routines, subroutines, objects, executable files, execution threads, procedures, functions, and the like.

The software, instructions, information, and the like may be transmitted/received via a transmission medium. For example, when software is transmitted from a website, a server, or another remote source by using at least one of wired technology (e.g., coaxial cable, optical fiber cable, twisted pair, and digital subscriber line (DSL)) and wireless technology (e.g., infrared rays and microwaves), at least one of the wired technology and the wireless technology is included in the definition of the transmission medium.

The terms "system" and "network" used in the present disclosure can be interchangeably used. The "network" may mean an apparatus (e.g., base station) included in a network.

In the present disclosure, terms such as "precoding", "precoder", "weight (precoding weight)", "quasi-co-location (QCL)", "transmission configuration indication state (TCI state)", "spatial relation", "spatial domain filter", "transmission power", "phase rotation", "antenna port", "antenna port group", "layer", "number of layers", "rank", "resource", "resource set", "resource group", "beam", "beam width", "beam angle", "antenna", "antenna element", and "panel" can be interchangeably used.

In the present disclosure, terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier", and "component carrier" can be interchangeably used. The base station may be referred to by a term such as a macro cell, a small cell, a femto cell, and a pico cell.

The base station can accommodate one or a plurality of (e.g., three) cells. In a case where the base station accommodates a plurality of cells, the entire coverage area of the base station can be partitioned into a plurality of smaller areas, and each smaller area can provide communication services through a base station subsystem (for example, small base station for indoors (remote radio head (RRH))). The term "cell" or "sector" refers to a part or the whole of a coverage area of at least one of a base station and a base station subsystem that perform communication service in the coverage.

In the present disclosure, the terms such as "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, or a client, or by other appropriate terms.

At least one of the base station and the mobile station may be referred to as a transmission apparatus, a reception apparatus, a radio communication apparatus, and the like. Note that at least one of the base station or the mobile station may be a device mounted on a moving object, a moving object itself, and the like. The moving object may be a transportation (for example, a car, an airplane, or the like), an unmanned moving object (for example, a drone, an autonomous car, or the like), or a (manned or unmanned) robot. Note that at least one of the base station or the mobile station also includes an apparatus that does not necessarily move during a communication operation. For example, at least one of the base station and the mobile station may be an Internet of Things (IoT) device such as a sensor.

The base station in the present disclosure may be replaced with a user terminal. For example, each aspect/embodiment of the present disclosure may be applied to a configuration in which communication between the base station and the user terminal is replaced with communication among a plurality of user terminals (which may be referred to as, for example, device-to-device (D2D), vehicle-to-everything (V2X), and the like). In this case, the user terminal 20 may have the function of the above-described base station 10. Further, terms such as "uplink" and "downlink" may be replaced with terms corresponding to communication between terminals (for example, "side"). For example, an uplink channel, a downlink channel, and the like may be replaced with a side channel.

Similarly, the user terminal in the present disclosure may be replaced with a base station. In the case, the base station 10 may have the function of the above-mentioned user terminal 20.

In the present disclosure, the operation performed by the base station may be performed by an upper node thereof in some cases. In a network including one or a plurality of network nodes with a base station, it is clear that various operations performed for communication with a terminal can be performed by a base station, one or more network nodes (e.g., mobility management entity (MME) and serving-gateway (S-GW) are possible, but are not limitations) other than the base station, or a combination thereof.

Each aspect/embodiment described in the present disclosure may be used alone, used in combination, or switched in association with execution. Further, the order of processing procedures, sequences, flowcharts, and the like of the aspects/embodiments described in the present disclosure may be re-ordered as long as there is no inconsistency. For example, for the method described in the present disclosure, various step elements are presented by using an illustrative order, and the method is not limited to the presented specific order.

Each aspect/embodiment described in the present disclosure may be applied to a system using Long-Term Evolution (LTE), LTE-Advanced (LTE-A), LTE-beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (x is, for example, an integer or decimal)), Future Radio Access (FRA), New-Radio Access Technology (RAT), New Radio (NR), New radio access (NX), Future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), or another appropriate radio communication method, a next generation system expanded on the basis of the foregoing, and the like. Further, a plurality of systems may be combined (for example, a combination of LTE or LTE-A and 5G, and the like) and applied.

The phrase "based on" used in the present disclosure does not mean "based on only", unless otherwise specified. In other words, the phrase "based on" means both "based only on" and "based at least on".

Any reference to an element using designations such as "first" and "second" used in the present disclosure does not generally limit the amount or order of these elements. These designations can be used in the present disclosure, as a convenient way of distinguishing between two or more elements. Reference to the first and second elements does not imply that only two elements may be adopted, or that the first element must precede the second element in some way.

The term "determining" used in the present disclosure may include a wide variety of operations. For example, "determining" may be regarded as "determining" judging, calculating, computing, processing, deriving, investigating, looking up, search, inquiry (e.g., looking up in table, database, or another data structure), ascertaining, and the like.

"Determining" may be regarded as determining receiving (e.g., receiving information), transmitting (e.g., transmitting information), inputting, outputting, accessing (e.g., accessing data in memory), and the like.

"Determining" may be regarded as determining resolving, selecting, choosing, establishing, comparing, and the like. That is, "determining" may be regarded as "determining" some operations.

"Determining" may be replaced with "assuming", "expecting", "considering", and the like.

The "maximum transmission power" described in the present disclosure may mean a maximum value of transmission power, nominal UE maximum transmit power, or rated UE maximum transmit power.

The terms "connected" and "coupled" used in the present disclosure, or all variations thereof mean all direct or indirect connections or coupling between two or more elements, and can include the presence of one or more intermediate elements between two elements "connected" or "coupled" with each other. The coupling or connection between the elements may be physical, logical, or a combination of these. For example, "connection" may be replaced with "access".

In the present disclosure, when two elements are connected, the two elements can be considered to be "connected" or "coupled" with each other by using one or more electrical wires, cables, printed electrical connections, and the like, and using, as some non-limiting and non-inclusive examples, electromagnetic energy and the like having a wavelength in a radio frequency domain, a microwave domain, and an optical (both visible and invisible) domain.

In the present disclosure, the phrase "A and B are different" may mean "A and B are different from each other". Note that the phrase may mean that "A and B are different from C". The terms such as "leave", "coupled", and the like may be interpreted similarly to "different".

In the present disclosure, when "include", "including", and variations thereof are used, these terms are intended to be inclusive similarly to the term "comprising". The term "or" used in the present disclosure is intended not to be an exclusive-OR.

In the present disclosure, when articles in English such as "a", "an", and "the" are added in translation, the present disclosure may include the plural forms of nouns that follow these articles.

Although the invention according to the present disclosure has been described in detail above, it is obvious to a person skilled in the art that the invention according to the present disclosure is by no means limited to the embodiments described in the present disclosure. The invention according to the present disclosure can be embodied with various corrections and in various modified aspects, without departing from the spirit and scope of the invention defined on the basis of the description of claims. Consequently, the description of the present disclosure is provided only for the purpose of explaining examples, and should by no means be construed to limit the invention according to the present disclosure in any way.

## Claims

1. A terminal comprising:
a receiving section that receives a first configuration of a primary physical uplink control channel (PUCCH) group, a second configuration of a secondary PUCCH group, and a first list indicating one or more hybrid automatic repeat request-acknowledgement (HARQ-ACK) codebook types for a physical downlink shared channel (PDSCH); and
a control section that determines one or more first HARQ-ACK codebook types for the primary PUCCH group based on the first list, and determines one or more second HARQ-ACK codebook types for the secondary PUCCH group based on at least one of the first list, a higher layer parameter, and a specification.

2. The terminal according to claim 1, wherein the higher layer parameter is one of a first parameter indicating one HARQ-ACK codebook type for the primary PUCCH group, a second parameter indicating one HARQ-ACK codebook type for the secondary PUCCH group, and a second list indicating one or more HARQ-ACK codebook types for the secondary PUCCH group.

3. The terminal according to claim 1, wherein the control section applies one of a first value in the first list, a second value in the first list, and a value corresponding to a priority index in the first list to the one or more first HARQ-ACK codebook types and the one or more second HARQ-ACK codebook types.

4. The terminal according to claim 2, wherein when the higher layer parameter is the second list, and the second list indicates two HARQ-ACK codebook types, the control section applies a first value in the second list to a PUCCH with a priority index 0 to the secondary PUCCH group, and applies a second value in the second list to a PUCCH with a priority index 1 to the secondary PUCCH group.

5. A radio communication method for a terminal, the method comprising:
receiving a first configuration of a primary physical uplink control channel (PUCCH) group, a second configuration of a secondary PUCCH group, and a first list indicating one or more hybrid automatic repeat request-acknowledgement (HARQ-ACK) codebook types for a physical downlink shared channel (PDSCH); and
determining one or more first HARQ-ACK codebook types for the primary PUCCH group based on the first list, and determines one or more second HARQ-ACK codebook types for the secondary PUCCH group based on at least one of the first list, a higher layer parameter, and a specification.

6. A base station comprising:
a transmitting section that transmits a first configuration of a primary physical uplink control channel (PUCCH) group, a second configuration of a secondary PUCCH group, and a first list indicating one or more hybrid automatic repeat request-acknowledgement (HARQ-ACK) codebook types for a physical downlink shared channel (PDSCH); and
a control section that control reception of one or more first HARQ-ACK codebook types for the primary PUCCH group, and reception of one or more second HARQ-ACK codebook types for the secondary PUCCH group, wherein
the first HARQ-ACK codebook type is determined based on the first list, and the second HARQ-ACK codebook type is determined based on at least one of the first list, a higher layer parameter, and a specification.
